# EUROPEAN PATENT APPLICATION

(11) **EP 4 832 608 A1**
(43) Date of publication of application: **28.10.2026**
(21) Application number: 24906238.1
(22) Date of filing: 12.12.2024
(51) Int. Cl.: H04W 72/044

(54) **UPLINK TRANSMISSION METHOD AND APPARATUS, AND TERMINAL, NETWORK-SIDE DEVICE AND MEDIUM**

(30) Priority: 18.12.2023 CN 202311750810
(71) Applicant: Vivo Mobile Communication Co., Ltd., Dongguan, Guangdong 523863 (CN)
(72) Inventor: SUN, Rongrong, Dongguan, Guangdong 523863 (CN); TAMRAKAR, Rakesh, Dongguan, Guangdong 523863 (CN); LIU, Hao, Dongguan, Guangdong 523863 (CN); SONG, Yang, Dongguan, Guangdong 523863 (CN)
(74) Representative: Walaski, Jan Filip
(86) International application number: PCT/CN2024/138882
(87) International publication number: WO 2025/130755

(57) **Abstract**

The present application belongs to the technical field of communications. Disclosed are an uplink transmission method and apparatus, and a terminal, a network-side device and a medium. The uplink transmission method in the embodiments of the present application comprises: a user equipment (UE) acquiring first information, wherein the first information is configuration information related to an uplink transmission, and the first information comprises at least one of the following: transmission resource information, information related to transmission power, and transmission beam information; and the UE executing the uplink transmission on the basis of the first information.

## Description

### CROSS-REFERENCE TO RELATED APPLICATIONS

The present application claims priority to Chinese Patent Application No. 202311750810.4, filed on December 18, 2023, which is incorporated herein by reference in its entirety.

### TECHNICAL FIELD

The present application belongs to the field of communication technologies, and specifically relates to an uplink transmission method and apparatus, a terminal, a network-side device, and a medium.

### BACKGROUND

Currently, to reduce deployment costs for network-side devices, in some scenarios, network-side devices are allowed to only receive data without sending data.

In scenarios of uplink-downlink transmission decoupling, the network-side device can typically only receive uplink information from user equipment (User Equipment, UE), without transmitting downlink synchronization reference signals, such as a synchronization signal/physical broadcast channel block (SS/PBCH block, SSB). However, for a network-side device that does not transmit downlink synchronization reference signals, when the UE sends uplink information to the network-side device, such as transmitting a PRACH for random access, the UE cannot determine the transmit beam and path loss of the PRACH through measurement of the downlink synchronization reference signal. As a result, the UE cannot determine the beam information and transmit power when transmitting uplink information, causing the UE to be unable to correctly transmit the uplink information.

### SUMMARY

Embodiments of the present application provide an uplink transmission method and apparatus, a terminal, a network-side device, and a medium, which can enable the UE to correctly perform uplink transmission.

According to a first aspect, an uplink transmission method is provided, executed by UE, and the method includes: obtaining, by the UE, first information, where the first information is configuration information related to uplink transmission, and the first information includes at least one of the following: transmission resource information, transmit power related information, and transmit beam information; and performing, by the UE, uplink transmission based on the first information.

According to a second aspect, an uplink transmission method is provided, executed by a network-side device, and the method includes: sending, by the network-side device, a first message to the UE, where the first message includes first information, the first information is configuration information related to uplink transmission, and the first information includes at least one of the following: transmission resource information, transmit power related information, and transmit beam information.

According to a third aspect, an uplink transmission apparatus is provided, where the apparatus includes: an obtaining module and an execution module, where the obtaining module is configured to obtain first information, where the first information is configuration information related to uplink transmission, and the first information includes at least one of the following: transmission resource information, transmit power related information, and transmit beam information; and the execution module is configured to perform uplink transmission based on the first information obtained by the obtaining module.

According to a fourth aspect, an uplink transmission apparatus is provided, where the apparatus includes: a sending module; where the sending module is configured to send a first message to the UE, where the first message includes first information, the first information is configuration information related to uplink transmission, and the first information includes at least one of the following: transmission resource information, transmit power related information, and transmit beam information.

According to a fifth aspect, a terminal is provided, the terminal including a processor and a memory, where the memory stores a program or instructions capable of running on the processor, and the program or instructions, when executed by the processor, implement the steps of the method according to the first aspect.

According to a sixth aspect, a terminal is provided, including a processor and a communication interface, and the processor is configured to: obtain first information, where the first information is configuration information related to uplink transmission, and the first information includes at least one of the following: transmission resource information, transmit power related information, and transmit beam information; and perform uplink transmission based on the first information.

According to a seventh aspect, a network-side device is provided, the network-side device including a processor and a memory, where the memory stores a program or instructions capable of running on the processor, and the program or instructions, when executed by the processor, implement the steps of the method according to the second aspect.

According to an eighth aspect, a network-side device is provided, including a processor and a communication interface, where the communication interface is configured to send a first message to the UE, where the first message includes first information, the first information is configuration information related to uplink transmission, and the first information includes at least one of the following: transmission resource information, transmit power related information, and transmit beam information.

According to a ninth aspect, a readable storage medium is provided, where the readable storage medium stores a program or instructions, and the program or instructions, when executed by a processor, implement the steps of the method according to the first aspect, or implement the steps of the method according to the second aspect.

According to a tenth aspect, a wireless communication system is provided, including: a terminal and a network-side device, where the terminal may be configured to execute the steps of the method according to the first aspect, and the network-side device may be configured to execute the steps of the method according to the second aspect.

According to an eleventh aspect, a chip is provided, the chip including a processor and a communication interface, where the communication interface is coupled to the processor, and the processor is configured to run a program or instructions to implement the method according to the first aspect, or to implement the method according to the second aspect.

According to a twelfth aspect, a computer program/program product is provided, where the computer program/program product is stored in a storage medium, and the program/program product is executed by at least one processor to implement the steps of the uplink transmission method according to the first aspect.

In the embodiments of the present application, UE obtains first information, where the first information is configuration information related to uplink transmission, and the first information includes at least one of the following: transmission resource information, transmit power related information, and transmit beam information; and the UE performs uplink transmission based on the first information. Through this method, the UE can obtain information such as transmission resource information, transmit power related information, and transmit beam information for uplink transmission, and perform uplink transmission based on the above information. In this way, during execution of uplink transmission, the UE can determine, according to the configuration information related to uplink transmission, a transmission resource, a transmit power, or a transmit beam for performing uplink transmission, thereby correctly performing uplink transmission.

### BRIEF DESCRIPTION OF DRAWINGS

FIG. 1 is a block diagram of a wireless communication system according to an embodiment of the present application;
FIG. 2A is a first schematic structural diagram of a media access control sub-protocol data unit in the related art;
FIG. 2B is a second schematic structural diagram of a media access control sub-protocol data unit in the related art;
FIG. 2C is a third schematic structural diagram of a media access control sub-protocol data unit in the related art;
FIG. 3 is a first schematic flowchart of an uplink transmission method according to an embodiment of the present application;
FIG. 4 is a second schematic flowchart of an uplink transmission method according to an embodiment of the present application;
FIG. 5 is a first schematic structural diagram of an uplink transmission apparatus according to an embodiment of the present application;
FIG. 6 is a second schematic structural diagram of an uplink transmission apparatus according to an embodiment of the present application;
FIG. 7 is a schematic structural diagram of a communication device according to an embodiment of the present application;
FIG. 8 is a schematic diagram of a hardware structure of a terminal according to an embodiment of the present application;
FIG. 9 is a first schematic structural diagram of a network-side device according to an embodiment of the present application; and
FIG. 10 is a second schematic structural diagram of a network-side device according to an embodiment of the present application.

### DESCRIPTION OF EMBODIMENTS

The following clearly and completely describes the technical solutions in the embodiments of the present application with reference to the accompanying drawings in the embodiments of the present application. Apparently, the described embodiments are only some rather than all of the embodiments of the present application. All other embodiments obtained by persons of ordinary skill in the art based on some embodiments of the present application shall fall within the protection scope of the present application.

The terms "first", "second", and the like in the present application are used to distinguish between similar objects rather than to describe a specific order or sequence. It should be understood that the terms used in this way are interchangeable in appropriate circumstances such that the embodiments of the present application can be implemented in other orders than the order illustrated or described herein. In addition, objects distinguished by "first" and "second" are generally of a same type, and the quantities of the objects are not limited. For example, there may be one or more first objects. In addition, "or" in the present application represents at least one of the connected objects. For example, "A or B" includes three solutions, that is, solution one includes A but not B; solution two includes B but not A; and solution three includes both A and B. The character "/" generally indicates an "or" relationship between contextually associated objects.

The term "indicate" in the present application can be either a direct indication (or explicit indication) or an indirect indication (or implicit indication). The direct indication can be understood as the sender explicitly informing the receiver of specific information, operations to be executed, or requested results in the sent indication; the indirect indication can be understood as the receiver determining corresponding information according to the indication sent by the sender, or performing judgment and determining the operation to be executed or the requested results according to the judgment results.

It should be noted that technologies described in the embodiments of the present application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of the present application. The technologies described may be used in the above-mentioned systems and radio technologies as well as other systems and radio technologies. However, in the following descriptions, a new radio (New Radio, NR) system is described for illustration purposes, NR terms are used in most of the following descriptions, and these technologies may also be applied to other applications than the NR system application, for example, the 6th generation (6^{th} Generation, 6G) communication system.

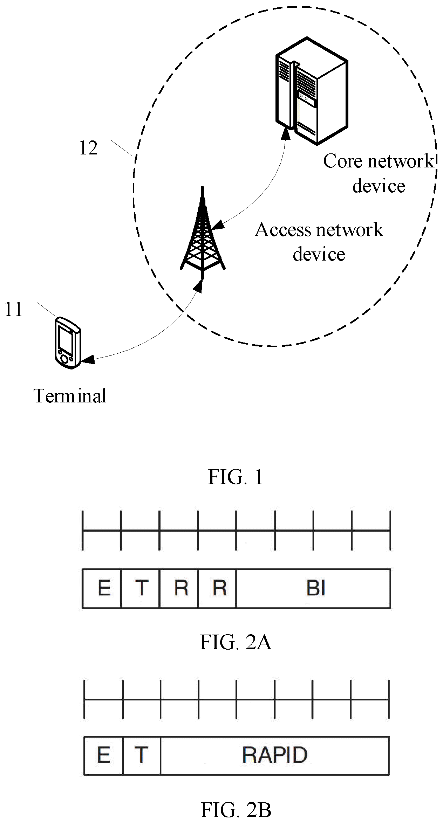

FIG. 1 is a block diagram of a wireless communication system applicable to an embodiment of the present application. The wireless communication system includes a terminal 11 and a network-side device 12. The terminal 11 may be a mobile phone, tablet personal computer (Tablet Personal Computer), laptop computer (Laptop Computer), a notebook computer, personal digital assistant (Personal Digital Assistant, PDA), palmtop computer, netbook, ultra-mobile personal computer (Ultra-mobile Personal Computer, UMPC), mobile internet device (Mobile Internet Device, MID), augmented reality (Augmented Reality, AR), virtual reality (Virtual Reality, VR) device, robots, wearable device (Wearable Device), flight vehicle (flight vehicle), vehicle user equipment (Vehicle User Equipment, VUE), shipborne device, pedestrian user equipment (Pedestrian User Equipment, PUE), smart home device (wireless communication-enabled home devices such as refrigerators, televisions, washing machines, or furniture), gaming console, personal computer (Personal Computer, PC), automated teller machine or self-service machine, or other terminal-side device. Wearable devices include smartwatches, smart bands, smart earphones, smart glasses, smart jewelry (smart bangles, smart bracelets, smart rings, smart necklaces, smart foot bangles, and smart anklets), smart wristbands, and smart clothing. Vehicle user equipment may also be referred to as an in-vehicle terminal, an in-vehicle controller, an in-vehicle module, an in-vehicle component, an in-vehicle chip, or an in-vehicle unit. It should be noted that the specific type of the terminal 11 is not limited in the embodiments of the present application. The network-side device 12 may include an access network device or core network device, where the access network device can also be referred to as a radio access network device (Radio Access Network, RAN), radio access network function, or radio access network unit. The access network device may include a base station, a wireless local area network (Wireless Local Area Network, WLAN) access point (Access Point, AP), or a wireless fidelity (Wireless Fidelity, WiFi) node, or the like. The base station may be referred to as a Node B (Node B, NB), evolved Node B (Evolved Node B, eNB), the next generation Node B (the next generation Node B, gNB), new radio Node B (New Radio Node B, NR Node B), access point, relay base station (Relay Base Station, RBS), serving base station (Serving Base Station, SBS), base transceiver station (Base Transceiver Station, BTS), a radio base station, a radio transceiver, basic service set (Basic Service Set, BSS), extended service set (Extended Service Set, ESS), home Node B (home Node B, HNB), home evolved Node B (home evolved Node B), transmission and reception point (Transmission Reception Point, TRP), or other appropriate terms in the art. Provided that the same technical effects are achieved, the base station is not limited to any specific technical term. It should be noted that in the embodiments of the present application, only the base station in the NR system is used as an example, although the specific type of the base station is not limited.

The core network device may include but is not limited to at least one of the following: a core network node, a core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), application function (Application Function, AF), and the like. It should be noted that in the embodiments of the present application, only the core network device in the NR system is introduced as an example, and the specific type of the core network device is not limited. The core network device is not limited to at least one of the following: a core network node, a core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), application function (Application Function, AF), and the like. It should be noted that in the embodiments of the present application, only the core network device in the NR system is introduced as an example, and the specific type of the core network device is not limited.

The following explains concepts, terms, or coined words involved in the embodiments of the present application.

### 1. Uplink-downlink decoupling

Due to reasons such as the new radio (New Radio, NR) uplink-downlink slot ratio and large differences in uplink-downlink power between user equipment and a base station, uplink-downlink coverage imbalance occurs in frequency bands such as 3.5G/4.9G, making uplink coverage limitation a bottleneck for 5G deployment. To solve the above problems, NR uplink-downlink decoupling defines a new spectrum pairing method, where downlink data is transmitted in frequency bands such as 3.5G/4.9G, and uplink data is transmitted in low frequency such as 1.8G, thereby improving uplink coverage.

### 2. Transmission and reception point (Transmission Reception Point, TRP)

A TRP refers to an antenna array including one or more antenna elements, which may be used for a network in a specific geographic location in a specific area. In NR, one base station may have one or more TRPs.

### 3. Physical random access channel (Physical Random Access Channel, PRACH)

PRACH is an access channel when UE initially initiates a call. After receiving a PRACH response message, the UE sends a radio resource control (Radio Resource Control, RRC) connection request (Connection Request) message on a PRACH channel according to the information indicated by the base station to establish an RRC connection.

Specifically, during the random access procedure of the UE, the UE transmits a random access preamble through the PRACH channel, attempting to access the network until a basic signaling connection to the network is established.

### 4. Random access procedure

In the prior art, the random access procedure may be a contention-based or contention-free random access procedure. The random access procedure, according to the procedure flow, can be divided into a 4-step random access procedure (also referred to as a Type-1 random access procedure) and a 2-step random access procedure (also referred to as a Type-2 random access procedure).

In NR Rel-15, the contention-based 4-step random access procedure is as follows: the UE first sends Msg1 to the network, that is, a random access preamble (preamble); after detecting the preamble, the network sends Msg2, that is, a random access response (Random Access Response, RAR) message, including a preamble identifier detected by the network, that is, a RAPID (RACH preamble ID), uplink PUSCH resources (UL grant information) allocated to the UE for sending Msg3, a temporary cell-radio network temporary identifier (TC-RNTI), a timing advance (Timing Advance, TA) command (command), and the like; after receiving Msg2, if the UE confirms that at least one of the preamble identifiers carried in Msg2 is consistent with the preamble identifier sent by itself, Msg3 containing contention resolution information is sent according to the uplink resources indicated in the RAR; and if the network does not receive the Msg3 physical uplink shared channel (Physical Uplink Shared Channel, PUSCH), retransmission of Msg3 PUSCH can be scheduled in a PDCCH scrambled with TC-RNTI. After receiving Msg3, the network sends Msg4 containing contention resolution information; and after receiving Msg4, the UE confirms that the content resolution information is consistent with that sent by itself in Msg3, thereby completing the 4-step random access.

### 5. Contention-based random access procedure

For the contention-based random access procedure, different UEs randomly select preambles for transmission, so different UEs may select the same preamble for transmission at the same random access occasion, which can be understood as a preamble collision of the UE. In this case, different UEs receive the same RAR, and different UEs transmit Msg3 PUSCH according to the scheduling information of the uplink (UP Link, UL) grant (UL grant) in the RAR. However, the network can only decode the PUSCH (containing contention resolution information) sent by one UE on one Msg3 PUSCH scheduling resource, and the network includes the contention resolution information received in Msg3 in Msg4. If the contention resolution information in Msg4 received by the UE matches the contention resolution information sent by the UE in Msg3 PUSCH, the UE considers the contention resolution successful. If the foregoing two contention resolution information do not match, the contention resolution is considered unsuccessful. If the contention resolution is unsuccessful, the UE reselects a PRACH transmission resource, performs PRACH transmission, and performs the next random access attempt.

In NR Rel-16, a 2-step random access procedure (2-step RACH) is introduced. The first step is that the UE sends a message A (MsgA) to the network side. After receiving the MsgA, the network side sends an MsgB message to the UE. If the UE does not receive MsgB within a specified period of time, the UE increments the counter for counting the number of MsgA transmissions by one and resend the MsgA. If the counter for counting the number of MsgA transmissions reaches a specific threshold, the UE switches from the 2-step random access procedure to the 4-step random access procedure. The MsgA includes an MsgA preamble part and an MsgA PUSCH part, the preamble part is sent on a random access channel occasion (RACH Occasion, RO) for 2-step RACH, and the PUSCH part is sent on an MsgA PUSCH resource associated with the sent MsgA preamble and RO. The MsgA PUSCH resource is a set of PUSCH resources configured relative to each PRACH slot (slot), including time-frequency resources and de-modulation reference signal (De-Modulation Reference Signal, DMRS) resources.

### 6. Contention-free random access procedure

In addition to contention-based random access initiated by the UE or the network, when the network measurement finds uplink out-of-sync or the uplink service has not been sent for a long time, the network can trigger a contention-free random access procedure. Specifically, the network sends downlink control information (Downlink Control Information, DCI) to the UE, the DCI carrying a PDCCH order (order), and the current PDCCH order includes at least the following parameters: a field, a DCI format identifier, frequency-domain resource allocation, a random access preamble index, a UL/SUL indicator, an SS/PBCH indicator, a PRACH mask index, and reserved bits. It can be understood that by interpreting the PDCCH order, the UE can determine the RO for PRACH transmission and the preamble for PRACH transmission.

### 7. Random access resource selection

In NR, a cell can configure multiple frequency division multiplexing (Frequency Division Multiplexing, FDM) PRACH transmission occasions (physical random access channel transmission occasions, also referred to as PRACH occasions, physical random access channel occasions), abbreviated as RO, at one time-domain position for transmitting PRACH. In a given time, the number of ROs that can be FDM-multiplexed may be: {1,2,4,8}. At one time, there are 8 RO resources distributed on different frequency-domain resources.

A preamble can only be transmitted on time-domain resources (that is, RO resources) configured by the higher-layer parameter PRACH configuration index (Configuration Index), and only on frequency-domain resources configured by the higher-layer parameter PRACH-FDM, where M is a higher-layer parameter PRACH-FDM. During initial access, the frequency-domain resources of PRACH are numbered in ascending order starting from the lowest-frequency RO resource within the initial active uplink bandwidth part (initial active uplink bandwidth part); otherwise, the frequency-domain resources of PRACH are numbered in ascending order starting from the lowest-frequency RO resource within the active uplink bandwidth part (active uplink bandwidth part). The RO resources are numbered sequentially from low frequency to high frequency as RO#0 to RO#7.

In NR, there is an association relationship between RO and the actually transmitted synchronization signal/physical broadcast channel block (SS/PBCH block, SSB), and the synchronization signal/physical broadcast channel block can also be abbreviated as synchronization signal block (SS Block). One SSB may be associated with multiple ROs, or multiple SSBs may be associated with one RO (in this case, different SSBs correspond to different preamble codes). Typically, the base station can use different beams to transmit different SSBs, and the corresponding UE transmits a preamble on a RO associated with an SSB. In this way, the UE selects a RO associated with an SSB having a higher RSRP strength or an RO-plus-preamble combination based on the reference signal receiving power (Reference Signal Receiving Power, RSRP) intensity of the received SSB to transmit the preamble. Therefore, the network can determine, based on the RO or the RO-plus-preamble combination of the received preamble, the SSB selected by the UE. Then the network sends Msg2 on the downlink beam corresponding to the SSB, so as to ensure the receive quality of the downlink signal.

In some examples, the number of FDM ROs at one time is 8, and the number of actually transmitted SSBs is 4, that is, SSB#0, SSB#1, SSB#2, and SSB#3, where each SSB is associated with 2 ROs. If the UE determines to transmit the Preamble on the RO corresponding to SSB#0, the UE can select one RO from RO#0 and RO#1 for PRACH transmission.

In other examples, the number of FDM ROs at one time is 2, and the number of actually transmitted SSBs is 8, that is, SSB#0, SSB#1, ..., and SSB#7, and every two SSBs are associated with one RO. When multiple SSBs share one RO, the preamble sets associated with the multiple SSBs are different (the same preamble cannot belong to preamble set 0 associated with different SSBs in this case). Taking RO#0 as an example, it has 60 preambles associated with SSBs, where preambles with index 0 to 29 are associated with SSB#0, and preambles with index 30 to 59 are associated with SSB#1.

Before transmitting PRACH, the UE first performs resource selection. The UE first selects an SSB with an RSRP higher than a threshold according to the RSRP of the received SSB; if multiple SSBs have an RSRP higher than the threshold, the terminal can select any SSB with an RSRP higher than the threshold; and when there is no SSB with an RSRP higher than the threshold, the UE selects one SSB based on implementation. Based on the network-side configuration, the UE obtains the correspondence between SSB and RO. After the UE selects the SSB, the RO corresponding to the selected SSB is used as the RO for transmitting PRACH/preamble. If the selected SSB is associated with multiple ROs, the terminal can select one of the ROs for PRACH/preamble transmission.

In some examples, combining the above examples, assuming the UE selects SSB#1, the UE can select one from RO#2 and RO#3 for PRACH/preamble transmission. If the UE selects SSB#1, the UE can select the earliest available RO from the ROs (RO#0 or #4) associated with SSB#1 for PRACH/preamble transmission. Further, in the selected RO, the UE selects one preamble from the preamble set associated with the selected SSB for PRACH transmission. For example, if one RO is associated with two SSBs, then in the available preamble set associated with the SSB in one RO, the preambles are divided into two subsets, and each subset corresponds to one SSB. The UE selects a specific preamble sequence from the preamble subset corresponding to the selected SSB for PRACH transmission.

### 8. RAR

In NR, the RAR is carried through a media access control (Media Access Control, MAC) sub-protocol data unit (sub Protocol Data Unit, subPDU). The MAC RAR subPDU has three types:

The first type of subPDU is for a backoff indication, which consists of one MAC subheader (subheader), and the specific structure is shown in FIG. 2A. "E" is an extension field, used to indicate whether this subPDU is the last subPDU in the MAC PDU. If set to 0, it indicates that it is the last one. "T" is set to 0; "R" is a reserved bit; and "BI" is used to indicate an overhead condition of the cell. It should be noted that if this subPDU is transmitted, it needs to appear at the beginning of the RAR MAC PDU.

The second type of subPDU is used for system information (System Information, SI) request, which only includes one subheader for carrying RAPID, and the specific structure is shown in FIG. 2B. "E" is an extension field, used to indicate whether this subPDU is the last subPDU in the MAC PDU. If set to 0, it indicates that it is the last one. "T" is set to 1; and "RAPID" is used to carry RAPID.

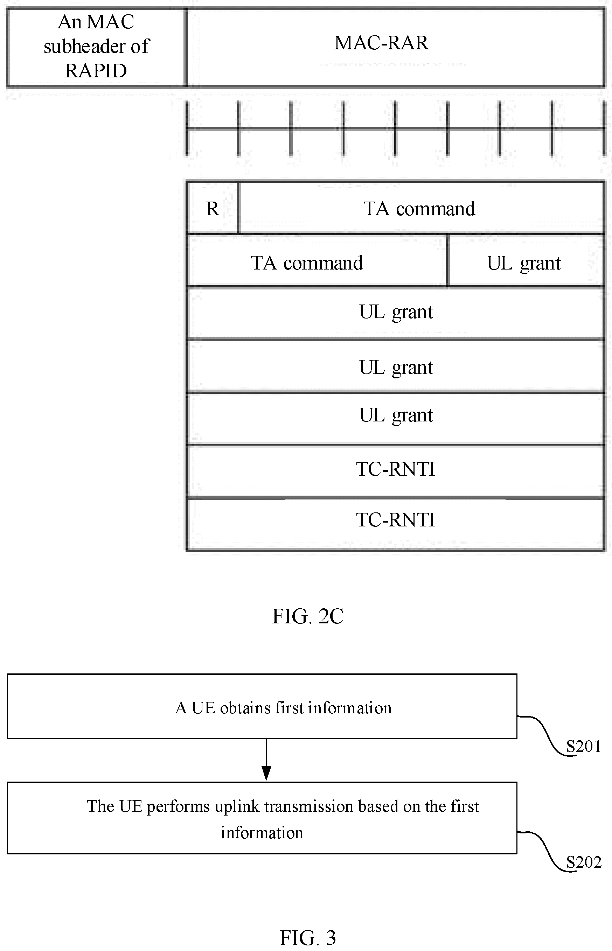

The third type of subPDU is used to indicate RAPID with MAC RAR, which consists of an MAC subheader for carrying RAPID and one MAC RAR, and the specific structure is shown in FIG. 2C. In the MAC RAR, "R" is a reserved bit; "TA command (command)" is used to indicate timing advance; "UL Grant (UL Grant)" is used to indicate resource scheduling information for the first PUSCH (that is, Msg3) of RAR; and "TC-RNTI" is used to carry TC-RNTI.

The 27 bits of "UL Grant" include six fields:
frequency hopping flag (Frequency hopping flag) (1 bit): used to indicate whether frequency hopping is enabled for the PUSCH;
PUSCH frequency-domain resource allocation (14 bits): used to indicate a frequency-domain scheduling position of PUSCH, and a hopping offset (offset, if frequency hopping is enabled);
PUSCH time-domain resource allocation (4 bits): used to indicate a time-domain scheduling position of PUSCH;
modulation and coding scheme (Modulation and Coding Scheme, MCS) (4 bits): used to indicate an MCS level, where selection of an MCS table depends on whether transform precoding (transform precoding) is enabled;
transmit power control (Transmit Power Control, TPC) command for PUSCH (3 bits): used to indicate a power step size parameter from a set {-6, -4, -2, 0, 2, 4, 6, 8} dB; and
channel state information (Channel State Information, CSI) request (1 bit): reserved bit.

### 9. RAR window (window)

After transmitting the preamble on the RO, the UE monitors a PDCCH scheduling random access response message Msg2/B in an RAR window. The starting position of the RAR window is the earliest control resource set (Control Resource Set, CORESET) for receiving PDCCH after the last symbol of the PRACH transmission timing, and the PDCCH is configured by the type1-PDCCH common search space (Common Search Space, CSS) set (Set). The length of the RAR window is configured by RRC.

It should be noted that CORESET is a set of physical resources in a specific area in the downlink resource grid, used to carry PDCCH or DCI. NR PDCCH is specifically designed to be transmitted in a configurable control resource set.

The uplink transmission method provided by the embodiments of the present application can be applied to a scenario where the UE transmits PRACH to perform random access.

In the related art, for a network-side device that does not send downlink synchronization reference signals (such as SSB), when the UE transmits PRACH to the network-side device to perform random access, the UE cannot determine the transmit beam and path loss of the PRACH through measurement of the downlink synchronization reference signal. As a result, the UE cannot determine the beam information and transmit power when transmitting the PRACH, thereby causing the UE to fail to correctly transmit the PRACH.

The uplink transmission method provided by the embodiments of the present application, for a network-side device that does not send downlink synchronization reference signals (such as SSB), when the UE transmits PRACH to the network-side device to perform random access, the UE can obtain configuration information related to uplink transmission, such as transmission resource information, transmit power related information, and transmit beam information, and then the UE can perform the transmitting of PRACH based on the above configuration information. In this way, the UE can transmit PRACH according to the configuration information, thereby correctly transmitting PRACH.

The following describes in detail the uplink transmission method provided by the embodiments of the present application by using some embodiments and application scenarios thereof with reference to the accompanying drawings.

FIG. 3 is a schematic flowchart of an uplink transmission method according to an embodiment of the present application. As shown in FIG. 3, the uplink transmission method may include the following steps S201 and S202:
Step S201: A UE obtains first information.

The first information is configuration information related to uplink transmission, and the first information includes at least one of the following: transmission resource information, transmit power related information, and transmit beam information.

In some embodiments of the present application, the first information is preconfigured information or information configured by a network-side device.

In some embodiments of the present application, the network-side device may be a TRP. A serving cell on which the UE is camped may be configured with multiple TRPs, and at least one first TRP among the multiple TRPs may send downlink information, and the UE may receive configuration information related to uplink transmission (that is, the first information) from the first TRP and perform uplink transmission based on the configuration information related to uplink transmission.

For example, the serving cell of the UE includes TRP1, TRP2, and TRP3, where TRP1 and TRP2 may receive data but are not allowed to send data, and TRP3 may transmit data (for example, send data). After TRP3 sends configuration information related to uplink transmission to the UE, the UE may receive the configuration information related to uplink transmission from TRP3 and perform uplink transmission according to the configuration information.

It can be understood that the uplink transmission method provided by the embodiments of the present application may be applied to a multi-TRP scenario. In the multi-TRP scenario, the serving cell may perform resource scheduling for the UE from multiple TRPs, thereby providing better coverage and data rate.

In some embodiments of the present application, the transmission resource information includes at least one of time-domain resources and frequency-domain resources.

In some embodiments of the present application, the transmission resource information includes at least one of the following: a random access occasion RO, an RO window or RO group, a timing advance (Timing Advance, TA), and a timing advance group (Timing Advance Group, TAG).

In some embodiments, beam information (that is, the transmit beam information) may include at least one of the following: (1) whether to use different beams for transmission; and (2) a reference signal, an antenna port, antenna panel information, and the like, for determining a beam direction.

In some embodiments, the UE may determine a first transmission resource for performing uplink transmission according to the transmission resource information. For example, in a case that the first information includes transmission resource information, the UE may determine the transmission resource information as the first transmission resource.

For example, the UE may determine, based on the RO window or group configuration sent by the network-side device, the first transmission resource for performing uplink transmission. For example, the UE may use different beams to send uplink information such as PRACH on different ROs.

In some embodiments of the present application, the transmit power related information includes at least one of the following: transmit power, a power offset value, and path loss information.

In some embodiments, in a case that the first information includes transmit power, the UE may determine the transmit power as the transmit power for uplink transmission.

For example, the network-side device configures the transmit power to be the maximum transmit power minus X dB, and the UE may determine the transmit power for uplink transmission to be the maximum transmit power minus X dB, where X > 0. For example, the X dB may be 3 dB.

In some embodiments, the power offset value is a power offset value of the transmit power for sending second uplink information compared to the transmit power for sending first uplink information. For example, the first uplink information may be a PRACH associated with an SSB initiated by the UE, or the first uplink information is a PRACH associated with an SSB triggered by a PDCCH order, and the second uplink information may be a PRACH associated with an uplink reference signal triggered by a PDCCH order.

In some embodiments, the network-side device configures the power offset value of the transmit power for the second uplink information compared to the transmit power for the first uplink information, and the UE may, according to the transmit power for sending the first uplink information and the power offset value, determine the transmit power for sending the second uplink information.

In some embodiments, in a case that the first information includes transmit power related information and the transmit power related information includes a power offset value, the UE may determine a first transmit power for uplink transmission based on the power offset value.

For example, the UE may determine the sum of the transmit power of a first PRACH and the power offset value as the first transmit power. It can be understood that the first transmit power may be the transmit power of a second PRACH, expressed as: P (second PRACH transmit power) = P (first PRACH transmit power) + power offset value, where P (first PRACH transmit power) is the transmit power of the PRACH for which RAR was successfully detected last time.

It can be understood that the second uplink information may be the uplink information that the UE needs to send when currently performing uplink transmission.

In some embodiments, in a case that the first information includes transmit power related information and the transmit power related information includes a power offset value and path loss information, the UE may, based on the power offset value and the path loss information, determine the first transmit power for uplink transmission.

For example, the UE may determine the sum of a target receive power of the UE, a reference path loss (that is, path loss information), and a power offset value as the transmit power of the PRACH, expressed as PRACH transmit power P = P (target receive power) + reference path loss + first power offset value.

It should be noted that the target receive power is the maximum receive power when the UE receives a signal, and the reference path loss may alternatively be obtained based on a reference path loss measurement reference signal.

In some embodiments, the first information further includes first indication information, and the first indication information is used to indicate whether the power offset value is effective. For example, the UE may receive an RRC message from the network-side device, and the RRC message is used to configure the power offset value and receive DCI from the network-side device, where the DCI indicates that the configured power offset value is effective.

For example, the UE receives signaling (such as DCI) from the network-side device, the signaling triggers PRACH transmission, the signaling includes 1-bit indication information, and the indication information indicates whether a power of an activated PRACH needs to apply the power offset value, that is, whether to apply the power offset value for determining the transmit power of the PRACH.

In the embodiments of the present application, the network-side device may indicate whether the configured power offset value is effective, and if it indicates that the power offset value is effective, the UE may determine a first transmit power for uplink transmission based on the power offset value.

For example, the network-side device may be a base station or a core network device.

In some embodiments of the present application, the first information is associated with a sounding reference signal (SRS); or
the first information is associated with a channel state information reference signal (CSI-RS); or
the first information is associated with a random access occasion RO.

In some embodiments, the network-side device may configure the association relationship between the first information and the SRS, or configure the association relationship between the first information and the CSI-RS, or configure the association relationship between the first information and the RO, and then send the first information to the UE, so that the UE can determine, based on the first information, a related configuration for performing uplink transmission.

For example, in a case that the UE sends the SRS, the UE may determine a transmission resource associated with the SRS as the transmission resource for performing uplink transmission; or the UE may determine a transmit power associated with the SRS as the transmit power for performing uplink transmission; or the UE may determine a transmit beam associated with the SRS as the transmit beam for performing uplink transmission.

For example, in a case that the UE determines the RO for sending the PRACH, the UE may determine a transmission resource associated with the RO as the transmission resource for performing uplink transmission; or the UE may determine a transmit power associated with the RO as the transmit power for performing uplink transmission; or the UE may determine a transmit beam associated with the RO as the transmit beam for performing uplink transmission.

Step S202: The UE performs uplink transmission based on the first information.

In some embodiments of the present application, the UE may determine, based on the first information, at least one of a transmission resource, a transmit power, and transmit beam for performing uplink transmission, and perform uplink transmission based on at least one of the transmission resource, the transmit power, and the transmit beam.

It can be understood that performing uplink transmission refers to sending uplink information, that is, an uplink signal or an uplink channel, to the network-side device.

In the uplink transmission method provided by the embodiments of the present application, the UE obtains first information, where the first information is configuration information related to uplink transmission, and the first information includes at least one of the following: transmission resource information, transmit power related information, and transmit beam information; and the UE performs uplink transmission based on the first information. Through this method, the UE can obtain information such as transmission resource information, transmit power related information, and transmit beam information for uplink transmission, and perform uplink transmission based on the above information. In this way, for transmitting uplink data to the network-side device, the UE can determine, according to the configuration information related to uplink transmission, a transmission resource, a transmit power, or a transmit beam for performing uplink transmission, thereby correctly performing uplink transmission.

In some embodiments of the present application, the first information includes transmit power related information, and the transmit power related information includes a power offset value. For example, step S202 may include the following steps S202a and S202b.

Step S202a: The UE determines a first transmit power based on a first power and the power offset value.

Step S202b: The UE performs uplink transmission based on the first transmit power.

The first power is a receive power of the UE or a first transmit power, the first transmit power is a transmit power for transmitting a first channel by the UE, and the first channel is any one of the following: an uplink synchronization channel associated with a downlink synchronization signal and an uplink synchronization channel transmitted to a first network-side device. The first network-side device is a network-side device capable of transmitting a downlink synchronization signal.

It should be noted that for the power offset value, reference may be made to the related description above, which is not repeated here.

In some embodiments, the downlink synchronization signal may be an SSB.

In some embodiments, the uplink synchronization channel may be a PRACH.

In some embodiments, the first network-side device may be a base station.

For example, taking the first channel as a PRACH associated with SSB as an example, the UE may calculate the sum of the transmit power of the PRACH for which RAR was successfully detected last time and the power offset value, and determine the sum of the transmit power of the PRACH and the power offset value as the first transmit power, and then use the first transmit power to transmit the PRACH.

In the embodiments of the present application, based on a transmit power of a PRACH for which RAR was successfully detected last time and the power offset value, the UE may determine a transmit power of the PRACH that needs to be transmitted currently. In this way, the UE can determine the transmit power for the current PRACH transmission based on the transmit power of the last successfully transmitted PRACH and the power offset value, so as to accurately determine the transmit power of the PRACH.

In some embodiments of the present application, step S201 may be implemented by the following step S201a.

Step S201a: The UE receives a first message from a network-side device.

The first message includes first information.

In some embodiments, the first message includes any one of the following: a physical downlink control channel PDCCH order, a random access response message RAR, and system information.

In some embodiments, the PDCCH order may be signaling transmitted by the network-side device for triggering PRACH.

In some embodiments, the RAR is a message sent by the network-side device in response to Msg1 (or PRACH). For example, the RAR may be Msg2 or MsgB.

In some examples, taking the first message as a PDCCH order as an example, the network-side device transmits a PDCCH order to the UE, the PDCCH order is used to trigger PRACH transmission, and the PDCCH signaling includes at least one of the following: power information for PRACH transmission, transmit beam information for PRACH transmission, PRACH transmission behavior information, and PRACH resource information. For example, the power information for PRACH transmission may include path loss information and power offset information; the PRACH transmission behavior information may include beam information for PRACH transmission; the PRACH transmission behavior information may include using one beam or multiple beams for transmission; and the PRACH resource information may be an RO group or RO window for transmitting PRACH. The UE may determine, based on the above information in the PDCCH signaling, information such as a transmit power, a transmission resource, and a transmit beam for transmitting PRACH.

In some examples, taking the first message as an RAR as an example, the network-side device sends an RAR message to the UE, the RAR message indicates at least one uplink resource (for example, an uplink PUSCH resource) allocated to the UE for sending Msg3, and the RAR message includes at least one of the following: at least one TA associated with at least one uplink resource, at least one piece of power information associated with at least one uplink resource, and TAG information associated with at least one uplink resource. The UE may determine, based on the uplink resources from the network-side device, an uplink resource for subsequently sending Msg3, determine, based on power information associated with the uplink resource, a transmit power for sending Msg3, and determine, based on a TA or TAG associated with the uplink resource, a timing advance for sending Msg3.

In the embodiments of the present application, the network-side device may indicate, in PDCCH signaling or RAR, a related configuration to be used for transmitting uplink information (for example, PRACH or Msg3) by the UE, so that the UE can determine, according to the indication of the network-side device, a related configuration for subsequent information transmission. In addition, because the related configuration is indicated by reusing related information sent by the network-side device to the UE, it avoids adding new radio signaling for indicating an uplink transmission related configuration of the UE, thereby improving the utilization of radio resources.

In some embodiments of the present application, the uplink transmission method may include the following step S203.

Step S203: The UE receives second indication information from the network-side device.

The second indication information is used to indicate that the first message carries the first information.

In some embodiments, the network-side device may send second indication information to the UE to indicate that the first message carries the first information, and after receiving the first information, the UE may parse the first information from the first message according to the indication of the second indication information, so as to perform uplink transmission based on the first information.

For example, taking the first message as an RAR message as an example, the network-side device may send indication information indicating that the RAR message carries configuration information related to uplink transmission, and after receiving the RAR message sent by the network-side device, the UE parses the RAR message to obtain the configuration information related to uplink transmission.

For example, the UE receives an RRC configuration, and the RRC configuration indicates the number of first messages included in the RAR.

It should be noted that step S203 may be performed before step S201, or step S203 may be performed simultaneously with step S201, or step S203 may be performed after step S201.

In the embodiments of the present application, the network-side device may indicate that the first message carries configuration information related to uplink transmission, so that the UE can parse the configuration information related to uplink transmission from the first message based on the indication of the network-side device, thereby further ensuring that the UE obtains the configuration information related to uplink transmission.

In some embodiments of the present application, step S202 may include the following step S202c.

Step S202c: The UE performs uplink transmission of a second message based on the first information.

It can be understood that the UE performing uplink transmission of the second message refers to: the UE sending the second message to the network-side device.

The second message includes any one of the following: a physical random access channel PRACH, a common physical uplink control channel PUCCH, a common physical uplink shared channel PUSCH, Msg1, and Msg3.

For example, taking the second message as PRACH as an example, after obtaining the configuration information related to uplink transmission, the UE may determine, according to the configuration information, a resource, a beam, or a transmit power for uplink transmission, and transmit the PRACH using the transmit power and the beam on the resource for uplink transmission.

In the embodiments of the present application, the UE may determine, according to the configuration information related to uplink transmission, information such as a resource, a beam, or a transmit power for transmitting uplink information such as PRACH, PUCCH, and PUSCH, without relying on a downlink synchronization signal for determining, thereby being able to correctly transmit uplink information even when the network-side device does not transmit a downlink synchronization signal.

In some embodiments of the present application, the first information includes transmission resource information. For example, step S202 may include the following step S202d.

Step S202d: The UE performs RO selection based on the transmission resource information and performs uplink transmission using the selected RO.

In some embodiments, in a case that the transmission resource information includes at least one transmission resource, the UE may determine a resource for uplink transmission from the at least one transmission resource.

In some embodiments, the resource for uplink transmission may be indicated by the network-side device, or the resource for uplink transmission is predefined by the protocol.

For example, in a case that the transmission resources include RO#0, RO#1, RO#2, and RO#3, if the network-side device indicates to perform uplink transmission on RO#2, the UE may select RO#2 from the multiple ROs to send uplink information.

For example, in a case that the transmission resources include RO#0, RO#1, RO#2, and RO#3, if the protocol predefines to perform uplink transmission on the first RO, the UE may select RO#0 from the multiple ROs to send uplink information.

In the embodiments of the present application, when performing uplink transmission, the UE may obtain transmission resource information for uplink transmission and select an uplink resource based on the transmission resource information, so that the UE can determine a transmission resource without relying on a downlink synchronization signal, thereby being able to correctly transmit uplink information even when the network-side device does not transmit a downlink synchronization signal.

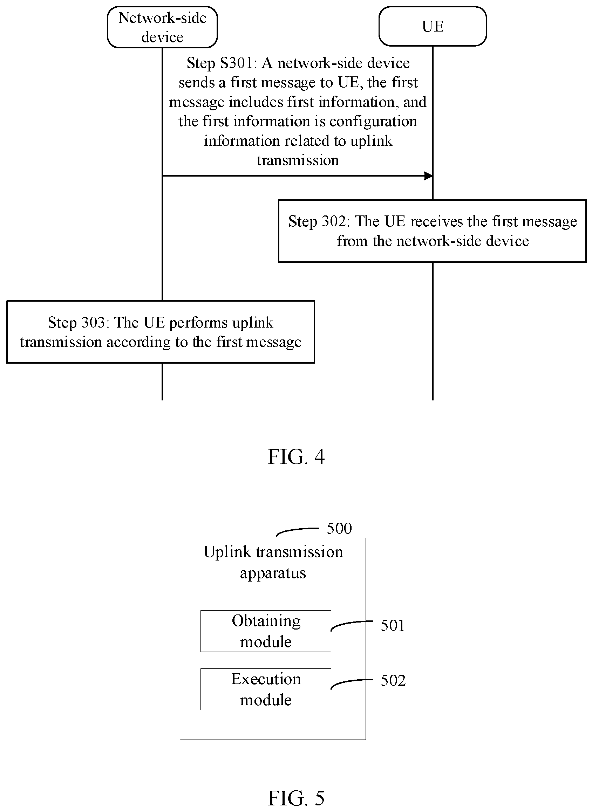

FIG. 4 is a schematic flowchart of an uplink transmission method according to the present application. As shown in FIG. 4, the uplink transmission method may include the following steps S301 to S303:

Step S301: A network-side device sends a first message to UE.

The first message includes first information, and the first information is configuration information related to uplink transmission.

Step S302: The UE receives the first message from the network-side device.

Step S303: The UE performs uplink transmission according to the first message.

In some embodiments of the present application, the first information includes at least one of the following: transmission resource information, transmit power related information, and transmit beam information.

In some embodiments of the present application, the transmission resource information includes at least one of the following: a random access occasion RO, an RO window or RO group, a timing advance, and a timing advance group.

In some embodiments of the present application, the transmit power related information includes at least one of the following: a transmit power, a power offset value, and path loss information.

In some embodiments of the present application, the first information further includes first indication information, and the first indication information is used to indicate whether the power offset value is effective.

In some embodiments of the present application, the first information is associated with a sounding reference signal SRS; or
the first information is associated with a channel state information reference signal CSI-RS; or
the first information is associated with a random access occasion RO.

In some embodiments of the present application, the first message includes any one of the following: a physical downlink control channel PDCCH order, a random access response message RAR, and system information.

In some embodiments of the present application, the transmission method may include the following step S304.

Step S304: The network-side device sends second indication information to the UE.

The second indication information is used to indicate that the first message carries the first information.

It should be noted that step S304 may be performed before step S301, or performed simultaneously with step S304, or performed after the step S304.

It should be noted that the explanation of this embodiment may refer to the related description of the above embodiment, which is not repeated here.

In the uplink transmission method provided by the embodiments of the present application, the network-side device sends a first message to the UE, the first message carrying configuration information related to uplink transmission, that is, the first information, and the first information may include at least one of the following: transmission resource information, transmit power related information, and transmit beam information. The UE may receive the first message and perform uplink transmission based on the first information carried in the first message. In this way, during execution of uplink transmission, the UE can determine, according to the configuration information related to uplink transmission, a transmission resource, a transmit power, or a transmit beam for performing uplink transmission, thereby correctly performing uplink transmission.

In the embodiments of the present application, an execution subject of the uplink transmission method may be an uplink transmission apparatus. In the embodiments of the present application, the uplink transmission apparatus provided by the embodiments of the present application is described by taking the uplink transmission apparatus performing the uplink transmission method as an example.

In some embodiments of the present application, FIG. 5 is a schematic structural diagram of an uplink transmission apparatus 500 according to an embodiment of the present application. As shown in FIG. 5, the apparatus includes an obtaining module 501 and an execution module 502, where the obtaining module 501 is configured to obtain first information, where the first information is configuration information related to uplink transmission, and the first information includes at least one of the following: transmission resource information, transmit power related information, and transmit beam information; and the execution module 502 is configured to perform uplink transmission based on the first information obtained by the obtaining module 501.

In some embodiments, the transmission resource information includes at least one of the following: a random access occasion RO, an RO window or RO group, a timing advance, and a timing advance group.

In some embodiments, the transmit power related information includes at least one of the following: a transmit power, a power offset value, and path loss information.

In some embodiments, the first information further includes first indication information, and the first indication information is used to indicate whether the power offset value is effective.

In some embodiments, the first information is associated with a sounding reference signal SRS; or
the first information is associated with a channel state information reference signal CSI-RS; or
the first information is associated with a random access occasion RO.

In some embodiments, the first information includes transmit power related information, and the transmit power related information includes a power offset value. The execution module is specifically configured to determine a first transmit power based on a first power and the power offset value and perform uplink transmission based on the first transmit power, where the first power is the receive power of the UE or a first transmit power, the first transmit power is a transmit power for transmitting a first channel by the UE, and the first channel is any one of the following: an uplink synchronization channel associated with a downlink synchronization signal and an uplink synchronization channel transmitted to a first network-side device. The first network-side device is a network-side device capable of transmitting a downlink synchronization signal.

In some embodiments, the apparatus further includes a receiving module; where the receiving module is configured to receive a first message from a network-side device, where the first message includes the first information; and the first message includes any one of the following: a physical downlink control channel PDCCH order, a random access response message RAR, and system information.

In some embodiments, the receiving module is further configured to receive second indication information from the network-side device, where the second indication information is used to indicate that the first message carries the first information.

In some embodiments, the execution module is specifically configured to perform uplink transmission of a second message based on the first information, where the second message includes any one of the following: a physical random access channel PRACH, a common physical uplink control channel PUCCH, a common physical uplink shared channel PUSCH, Msg1, and Msg3.

For the uplink transmission apparatus provided by the embodiments of the present application, the uplink transmission apparatus obtains first information, the first information is configuration information related to uplink transmission, and the first information includes at least one of the following: transmission resource information, transmit power related information, and transmit beam information. The uplink transmission apparatus performs uplink transmission based on the first information. Through this method, the uplink transmission apparatus can obtain information such as transmission resource information, transmit power related information, and transmit beam information for uplink transmission, and perform uplink transmission based on the above information. In this way, during execution of uplink transmission, the transmission resource, transmit power, or transmit beam for performing the uplink transmission can be determined according to the configuration information related to uplink transmission, thereby correctly performing uplink transmission.

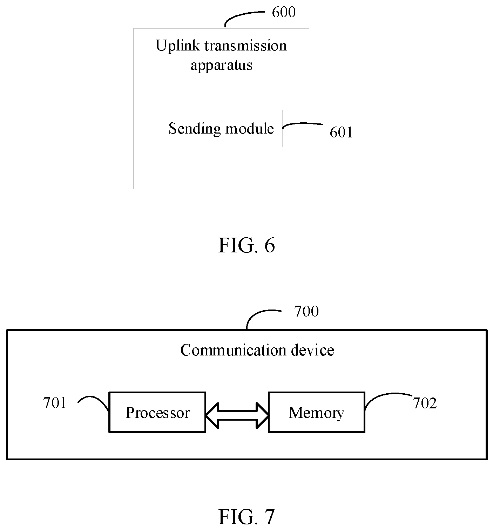

In some embodiments of the present application, FIG. 6 is a schematic structural diagram of an uplink transmission apparatus 600 according to an embodiment of the present application. As shown in FIG. 6, the apparatus includes a sending module 601; where the sending module is configured to send a first message to the UE, where the first message includes first information, the first information is configuration information related to uplink transmission, and the first information includes at least one of the following: transmission resource information, transmit power related information, and transmit beam information.

In some embodiments, the first message includes any one of the following: a physical downlink control channel PDCCH order, a random access response message RAR, and system information.

In some embodiments, the sending module is further configured to send second indication information to the UE, where the second indication information is used to indicate that the first message carries the first information.

In some embodiments, the transmission resource information includes at least one of the following: a random access occasion RO, an RO window or RO group, a timing advance, and a timing advance group.

In some embodiments, the transmit power related information includes at least one of the following: a transmit power, a power offset value, and path loss information.

In some embodiments, the first information further includes first indication information, and the first indication information is used to indicate whether the power offset value is effective.

In some embodiments, the first information is associated with a sounding reference signal SRS; or the first information is associated with a channel state information reference signal CSI-RS; or the first information is associated with a random access occasion RO.

For the uplink transmission apparatus provided by the embodiments of the present application, the uplink transmission apparatus sends a first message to the UE, the first message carries configuration information related to uplink transmission, that is, first information, and the first information may include at least one of the following: transmission resource information, transmit power related information, and transmit beam information. The UE may receive the first message and perform uplink transmission based on the first information carried in the first message. In this way, during execution of uplink transmission, the UE can determine, according to the configuration information related to uplink transmission, a transmission resource, a transmit power, or a transmit beam for performing uplink transmission, thereby correctly performing uplink transmission.

The uplink transmission apparatus in the embodiments of the present application may be an electronic device, such as an electronic device with an operating system, or a component in an electronic device, such as an integrated circuit or a chip. The electronic device may be a terminal or other devices other than a terminal. For example, the terminal may include but is not limited to the types of the terminal 11 listed above, and other devices may be a server, a network attached storage (Network Attached Storage, NAS), and the like, which is not specifically limited in the embodiments of the present application.

The uplink transmission apparatus provided by the embodiments of the present application may implement each process implemented by the embodiments of the method in FIGs. 1 to 4 and achieve the same technical effect. To avoid repetition, details are not described here.

As shown in FIG. 7, an embodiment of the present application further provides a communication device 700, including a processor 701 and a memory 702. The memory 702 stores a program or instructions capable of running on the processor 701. For example, in a case that the communication device 700 is a terminal, and when the program or instructions are executed by the processor 701, the processes of the foregoing embodiment of the above uplink transmission method are implemented, with the same technical effects achieved. In a case that the communication device 700 is a network-side device, when the program or instructions are executed by the processor 701, the processes of the foregoing embodiment of the above uplink transmission method are implemented, with the same technical effects achieved. To avoid repetition, details are not described here.

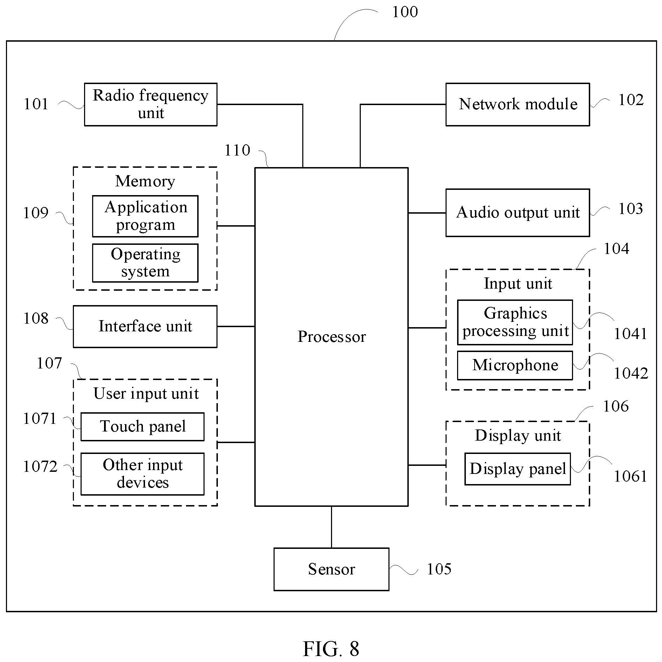

An embodiment of the present application further provides a terminal, including a processor and a communication interface, where the communication interface is coupled to the processor, and the processor is configured to run a program or instructions to implement the steps in the embodiments of the method shown in FIG. 3. This terminal embodiment corresponds to the foregoing embodiments of the method on the terminal side. All processes and implementations in the foregoing embodiments of the method may be applicable to this terminal embodiment, with the same technical effect achieved. Specifically, FIG. 8 is a schematic diagram of a hardware structure of a terminal implementing an embodiment of the present application.

The terminal 100 includes but is not limited to: at least some components of a radio frequency unit 101, a network module 102, an audio output unit 103, an input unit 104, a sensor 105, a display unit 106, a user input unit 107, an interface unit 108, a memory 109, a processor 110, and the like.

It can be understood by those skilled in the art that the terminal 100 may further include a power supply (for example, a battery) supplying power to the components. The power supply may be logically connected to the processor 110 via a power management system, so that functions such as charge management, discharge management, and power consumption management are implemented by using the power management system. The structure of the terminal shown in FIG. 8 does not constitute a limitation on the terminal. The terminal may include more or fewer components than illustrated in the figure, or combine some components, or have a different component arrangement. Details are not described herein.

It should be understood that in an embodiment of the present application, the input unit 104 may include a graphics processing unit (Graphics Processing Unit, GPU) 1041 and a microphone 1042. The graphics processing unit 1041 processes image data of a static picture or a video obtained by an image capture apparatus (such as a camera) in a video capture mode or an image capture mode. The display unit 106 may include a display panel 1061, and the display panel 1061 may be configured in a form of a liquid crystal display, an organic light-emitting diode, and the like. The user input unit 107 includes at least one of a touch panel 1071 and other input devices 1072. The touch panel 1071 is also referred to as a touch screen. The touch panel 1071 may include two parts: a touch detection apparatus and a touch controller. The other input devices 1072 may include but are not limited to a physical keyboard, a function key (such as a volume control key or an on/off key), a trackball, a mouse, and a joystick. Details are not described herein.

In the embodiments of the present application, the radio frequency unit 101 receives downlink data from a network-side device and transfers the data to the processor 110 for processing; and the radio frequency unit 101 may additionally send uplink data to the network-side device. Generally, the radio frequency unit 101 includes but is not limited to an antenna, an amplifier, a transceiver, a coupler, a low noise amplifier, a duplexer, and the like.

The memory 109 may be configured to store software programs or instructions and various data. The memory 109 may include a first storage area for storing programs or instructions and a second storage area for storing data. The first storage area may store an operating system, an application program or instructions required by at least one function (for example, a sound playback function or an image playback function), and the like. In addition, the memory 109 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 109 described in the embodiments of the present application is intended to include but is not limited to these and any other suitable types of memories.

The processor 110 may include one or more processing units. Optionally, the processor 110 may integrate an application processor and a modem processor. The application processor primarily processes operations involving an operating system, user interface, application program, or the like. The modem processor primarily processes radio communication, for example, being a baseband processor. It can be understood that a modem processor may alternatively be not integrated in the processor 110.

The processor 110 is configured to obtain first information, where the first information is configuration information related to uplink transmission, and the first information includes at least one of the following: transmission resource information, transmit power related information, and transmit beam information. The processor 110 is further configured to perform uplink transmission based on the first information.

In some embodiments, the transmission resource information includes at least one of the following: a random access occasion RO, an RO window or RO group, a timing advance, and a timing advance group.

In some embodiments, the transmit power related information includes at least one of the following: a transmit power, a power offset value, and path loss information.

In some embodiments, the first information further includes first indication information, and the first indication information is used to indicate whether the power offset value is effective.

In some embodiments, the first information is associated with a sounding reference signal SRS; or
the first information is associated with a channel state information reference signal CSI-RS; or
the first information is associated with a random access occasion RO.

In some embodiments, the first information includes transmit power related information, and the transmit power related information includes a power offset value; the processor 110 is specifically configured to determine a first transmit power based on a first power and the power offset value, and perform uplink transmission based on the first transmit power; where the first power is a receive power of the UE or a first transmit power, the first transmit power is a transmit power for transmitting a first channel by the UE, and the first channel is any one of the following: an uplink synchronization channel associated with a downlink synchronization signal and an uplink synchronization channel sent to a first network-side device. The first network-side device is a network-side device capable of transmitting a downlink synchronization signal.

In some embodiments, the radio frequency unit 101 is configured to receive a first message from a network-side device, where the first message includes the first information; and the first message includes any one of the following: a physical downlink control channel PDCCH order, a random access response message RAR, and system information.

In some embodiments, the radio frequency unit 101 is further configured to receive second indication information from the network-side device, where the second indication information is used to indicate that the first message carries the first information.

In some embodiments, the processor 110 is specifically configured to perform uplink transmission of a second message based on the first information, where the second message includes any one of the following: a physical random access channel PRACH, a common physical uplink control channel PUCCH, a common physical uplink shared channel PUSCH, Msg1, and Msg3.

For the terminal provided by the embodiments of the present application, the terminal obtains first information, the first information is configuration information related to uplink transmission, and the first information includes at least one of the following: transmission resource information, transmit power related information, and transmit beam information; and the uplink transmission apparatus performs uplink transmission based on the first information. Through this method, the terminal can obtain information such as transmission resource information, transmit power related information, and transmit beam information for uplink transmission, and perform uplink transmission based on the above information. In this way, during execution of uplink transmission, the terminal can determine, according to the configuration information related to uplink transmission, a transmission resource, a transmit power, or a transmit beam for performing uplink transmission, thereby correctly performing uplink transmission.

It can be understood that the implementation processes of the various implementation manners mentioned in this embodiment may refer to the related description of the embodiments of the method and achieve the same or corresponding technical effects, which is not repeated here to avoid repetition.

An embodiment of the present application further provides a network-side device, including a processor and a communication interface, where the communication interface is coupled to the processor, and the processor is configured to run a program or instructions to implement the steps of the embodiments of the method shown in FIG. 4. This network-side device embodiment corresponds to the embodiments of the above network-side device method, and each implementation process and implementation manner of the embodiments of the above method can be applied to this network-side device embodiment, with the same technical effects achieved.

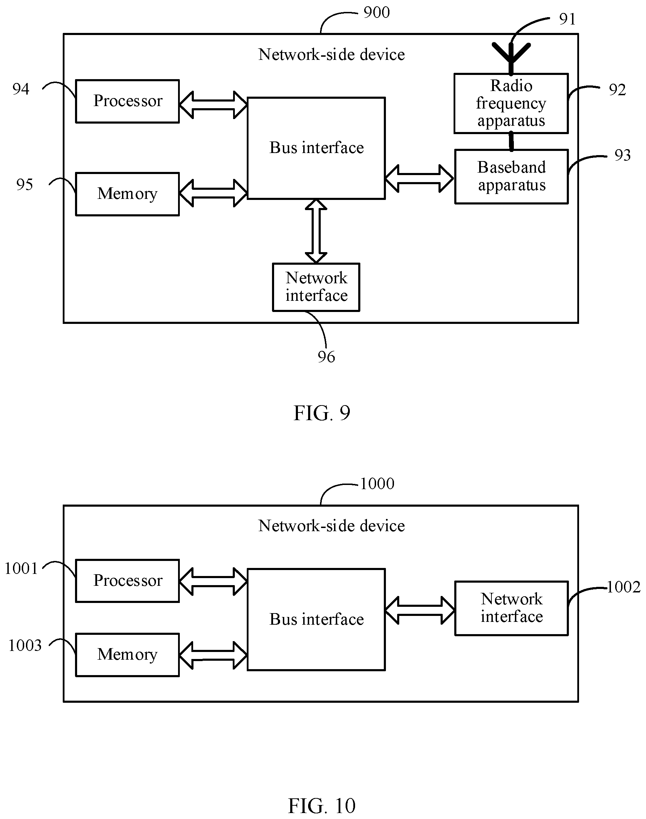

Specifically, an embodiment of the present application further provides a network-side device. As shown in FIG. 9, the network-side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information through the antenna 91 and sends the received information to the baseband apparatus 93 for processing. In a downlink direction, the baseband apparatus 93 processes the to-be-sent information and sends the information to the radio frequency apparatus 92, and the radio frequency apparatus 92 processes the received information and sends the information out through the antenna 91.

The method executed by the network-side device in the above embodiments may be implemented by the baseband apparatus 93. The baseband apparatus 93 includes a baseband processor.

The baseband apparatus 93 may, for example, include at least one baseband board, multiple chips are provided on the baseband board. As shown in FIG. 9, one chip is, for example, a baseband processor, connected to the memory 95 through a bus interface to call a program in the memory 95 and execute the network-side device operations shown in the embodiments of the above method.

The network-side device may further include a network interface 96, and the interface is, for example, a common public radio interface (Common Public Radio Interface, CPRI).

Specifically, the network-side device 900 of the embodiment of the present application further includes instructions or a program stored on the memory 95 and capable of running on the processor 94, the processor 94 calling the instructions or a program in the memory 95 to execute the methods executed by each module shown in FIG. 5 and achieving the same technical effect. To avoid repetition, details are not described here.

Specifically, an embodiment of the present application further provides a network-side device. As shown in FIG. 10, the network-side device 1000 includes a processor 1001, a network interface 1002, and a memory 1003. The network interface 1002 is, for example, a common public radio interface (common public radio interface, CPRI).

Specifically, the network-side device 1000 of the embodiment of the present application further includes instructions or a program stored on the memory 1003 and capable of running on the processor 1001, the processor 1001 calling the instructions or a program in the memory 1003 to execute the methods executed by each module shown in FIG. 6 and achieving the same technical effect. To avoid repetition, details are not described here.

An embodiment of the present application further provides a readable storage medium, where the readable storage medium stores a program or instructions. When the program or instructions are executed by a processor, each process of the embodiments of the above uplink transmission method can be implemented and the same technical effect can be achieved. To avoid repetition, details are not described here.

The processor is the processor in the terminal described in the above embodiments. The readable storage medium includes a computer-readable storage medium, such as a computer read-only memory (ROM), a random access memory (RAM), a magnetic disk, or an optical disc. In some examples, the readable storage medium may be a non-transitory readable storage medium.

Another embodiment of the present application further provides a chip, where the chip includes a processor and a communication interface, the communication interface is coupled to the processor, and the processor is configured to run a program or instructions to implement each process of the embodiments of the above uplink transmission method and achieving the same technical effect. To avoid repetition, details are not described here.

It should be understood that the chip mentioned in an embodiment of the present application may also be referred to as a system-level chip, a system chip, a chip system, a system-on-chip, or the like.

An embodiment of the present application further provides a computer program/program product, where the computer program/program product is stored in a storage medium. The computer program/program product is executed by at least one processor to implement each process of the embodiments of the above uplink transmission method and achieve the same technical effect. To avoid repetition, details are not described here.

An embodiment of the present application further provides an uplink transmission system, including: a terminal and a network-side device, where the terminal may be configured to execute the steps of the UE-side uplink transmission method as described above, and the network-side device may be configured to execute the steps of the network-side device-side uplink transmission method as described above.

It should be noted that the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or device. Without more constraints, an element preceded by "includes a ..." does not preclude the presence of other identical elements in the process, method, article, or apparatus that includes the element. In addition, it should be noted that the scope of the method and the apparatus in the embodiments of the present application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiment may alternatively be implemented by hardware. The computer software product is stored in a storage medium (for example, a ROM, a RAM, a magnetic disk, or an optical disc), and includes several instructions for instructing a terminal or a network-side device to perform the method described in the embodiments of the present application.

The foregoing describes the embodiments of the present application with reference to the accompanying drawings. However, the present application is not limited to the foregoing specific embodiments. The foregoing specific embodiments are merely illustrative rather than restrictive. As instructed by the present application, persons of ordinary skill in the art may develop many other manners without departing from principles of the present application and the protection scope of the claims, and all such manners fall within the protection scope of the present application.

## Claims

1. An uplink transmission method, wherein the method comprises:
obtaining, by user equipment UE, first information, wherein the first information is configuration information related to uplink transmission, and the first information comprises at least one of the following: transmission resource information, transmit power related information, and transmit beam information; and
performing, by the UE, the uplink transmission based on the first information.

2. The method according to claim 1, wherein the transmission resource information comprises at least one of the following: a random access occasion RO, an RO window or RO group, a timing advance, and a timing advance group.

3. The method according to claim 1, wherein the transmit power related information comprises at least one of the following: a transmit power, a power offset value, and path loss information.

4. The method according to claim 3, wherein the first information further comprises first indication information, and the first indication information is used to indicate whether the power offset value is effective.

5. The method according to any one of claims 1 to 4, wherein the first information is associated with a sounding reference signal SRS; or
the first information is associated with a channel state information reference signal CSI-RS; or
the first information is associated with a random access occasion RO.

6. The method according to any one of claims 1 to 5, wherein the first information comprises transmit power related information, and the transmit power related information comprises a power offset value;
the performing, by the UE, the uplink transmission based on the first information comprises:
determining, by the UE, a first transmit power based on a first power and the power offset value;
performing, by the UE, the uplink transmission based on the first transmit power; wherein
the first power is a receive power of the UE or a first transmit power, the first transmit power is a transmit power for transmitting a first channel by the UE, and the first channel is any one of the following: an uplink synchronization channel associated with a downlink synchronization signal and an uplink synchronization channel transmitted to a first network-side device; wherein the first network-side device is a network-side device capable of transmitting a downlink synchronization signal.

7. The method according to any one of claims 1 to 6, wherein the obtaining, by the UE, first information comprises:
receiving, by the UE, a first message from a network-side device, wherein the first message comprises the first information; and
the first message comprises any one of the following: a physical downlink control channel PDCCH order, a random access response message RAR, and system information.

8. The method according to claim 7, wherein the method further comprises:
receiving, by the UE, second indication information from the network-side device, wherein the second indication information is used to indicate that the first message carries the first information.

9. The method according to any one of claims 1 to 8, wherein the performing, by the UE, the uplink transmission based on the first information comprises:
performing, by the UE, uplink transmission of a second message based on the first information, wherein the second message comprises any one of the following: a physical random access channel PRACH, a common physical uplink control channel PUCCH, a common physical uplink shared channel PUSCH, Msg1, and Msg3.

10. The method according to any one of claims 1 to 9, wherein the first information comprises transmission resource information; and the performing, by the UE, the uplink transmission based on the first information comprises:
performing, by the UE, RO selection based on the transmission resource information, and performing the uplink transmission using the selected RO.

11. An uplink transmission method, wherein the method comprises:
sending, by a network-side device, a first message to UE, wherein the first message comprises first information, the first information is configuration information related to uplink transmission, and the first information comprises at least one of the following: transmission resource information, transmit power related information, and transmit beam information.

12. The method according to claim 11, wherein the first message comprises any one of the following: a physical downlink control channel PDCCH order, a random access response message RAR, and system information.

13. The method according to claim 11 or 12, wherein the method further comprises:
sending, by the network-side device, second indication information to the UE, wherein the second indication information is used to indicate that the first message carries the first information.

14. The method according to claim 11, wherein the transmission resource information comprises at least one of the following: a random access occasion RO, an RO window or RO group, a timing advance, and a timing advance group.

15. The method according to claim 11, wherein the transmit power related information comprises at least one of the following: transmit power, a power offset value, and path loss information.

16. The method according to claim 15, wherein the first information further comprises first indication information, and the first indication information is used to indicate whether the power offset value is effective.

17. The method according to any one of claims 11 to 16, wherein the first information is associated with a sounding reference signal SRS; or
the first information is associated with a channel state information reference signal CSI-RS; or
the first information is associated with a random access occasion RO.

18. An uplink transmission apparatus, wherein the apparatus comprises: an obtaining module and an execution module, wherein:
the obtaining module is configured to obtain first information, wherein the first information is configuration information related to uplink transmission, and the first information comprises at least one of the following: transmission resource information, transmit power related information, and transmit beam information; and
the execution module is configured to perform the uplink transmission based on the first information obtained by the obtaining module.

19. The apparatus according to claim 18, wherein the transmission resource information comprises at least one of the following: a random access occasion RO, an RO window or RO group, a timing advance, and a timing advance group.

20. The apparatus according to claim 18, wherein the transmit power related information comprises at least one of the following: a transmit power, a power offset value, and path loss information.

21. The apparatus according to claim 20, wherein the first information further comprises first indication information, and the first indication information is used to indicate whether the power offset value is effective.

22. The apparatus according to any one of claims 18 to 21, wherein the first information is associated with a sounding reference signal SRS; or
the first information is associated with a channel state information reference signal CSI-RS; or
the first information is associated with a random access occasion RO.

23. The apparatus according to any one of claims 21 to 22, wherein the first information comprises transmit power related information, the transmit power related information comprises a power offset value; and the execution module is specifically configured to:
determine a first transmit power based on a first power and the power offset value; and
perform the uplink transmission based on the first transmit power; wherein
the first power is a receive power of the UE or a first transmit power, the first transmit power is a transmit power for transmitting a first channel by the UE, and the first channel is any one of the following: an uplink synchronization channel associated with a downlink synchronization signal and an uplink synchronization channel transmitted to a first network-side device; wherein the first network-side device is a network-side device capable of transmitting a downlink synchronization signal.

24. The apparatus according to any one of claims 18 to 23, wherein the apparatus further comprises: a receiving module; wherein
the receiving module is configured to receive a first message from a network-side device, wherein the first message comprises the first information; and
the first message comprises any one of the following: a physical downlink control channel PDCCH order, a random access response message RAR, and system information.

25. The apparatus according to claim 24, wherein the receiving module is further configured to receive second indication information from the network-side device, wherein the second indication information is used to indicate that the first message carries the first information.

26. The apparatus according to any one of claims 18 to 24, wherein the execution module is specifically configured to perform uplink transmission of a second message based on the first information, wherein the second message comprises any one of the following: a physical random access channel PRACH, a common physical uplink control channel PUCCH, a common physical uplink shared channel PUSCH, Msg1, and Msg3.

27. The apparatus according to any one of claims 18 to 26, wherein the first information comprises transmission resource information; and the execution module is specifically configured to perform RO selection based on the transmission resource information, and perform the uplink transmission using the selected RO.

28. An uplink transmission apparatus, wherein the apparatus comprises: a sending module; wherein
the sending module is configured to send a first message to UE, wherein the first message comprises first information, the first information is configuration information related to uplink transmission, and the first information comprises at least one of the following: transmission resource information, transmit power related information, and transmit beam information.

29. The apparatus according to claim 28, wherein the first message comprises any one of the following: a physical downlink control channel PDCCH order, a random access response message RAR, and system information.

30. The apparatus according to claim 28 or 29, wherein the sending module is further configured to send second indication information to the UE, wherein the second indication information is used to indicate that the first message carries the first information.

31. The apparatus according to claim 28, wherein the transmission resource information comprises at least one of the following: a random access occasion RO, an RO window or RO group, a timing advance, and a timing advance group.

32. The apparatus according to claim 28, wherein the transmit power related information comprises at least one of the following: a transmit power, a power offset value, and path loss information.

33. The apparatus according to claim 32, wherein the first information further comprises first indication information, and the first indication information is used to indicate whether the power offset value is effective.

34. The apparatus according to any one of claims 28 to 32, wherein the first information is associated with a sounding reference signal SRS; or
the first information is associated with a channel state information reference signal CSI-RS; or
the first information is associated with a random access occasion RO.

35. A terminal, comprising a processor and a memory, wherein the memory stores a program or instructions capable of running on the processor, and the program or instructions, when executed by the processor, implement the steps of the uplink transmission method according to any one of claims 1 to 10, or implement the steps of the uplink transmission method according to any one of claims 11 to 17.

36. A network-side device, comprising a processor and a memory, wherein the memory stores a program or instructions capable of running on the processor, and the program or instructions, when executed by the processor, implement the steps of the uplink transmission method according to any one of claims 1 to 10, or implement the steps of the uplink transmission method according to any one of claims 11 to 17.

37. A readable storage medium, wherein the readable storage medium stores a program or instructions, and the program or instructions, when executed by a processor, implement the uplink transmission method according to any one of claims 1 to 10, or implement the steps of the uplink transmission method according to any one of claims 11 to 17.
